# EUROPEAN PATENT APPLICATION

(11) **EP 3 696 718 A1**
(43) Date of publication of application: **19.08.2020**
(21) Application number: 19166402.8
(22) Date of filing: 29.03.2019
(51) Int. Cl.: G06K 9/00

(54) **METHOD AND SYSTEM FOR DETERMINING DRIVABLE ROAD REGIONS FOR SAFE NAVIGATION OF AN AUTONOMOUS VEHICLE**

(30) Priority: 15.02.2019 IN 201941006129
(71) Applicant: Wipro Limited, 560 035 Karnataka (IN)
(72) Inventor: KUMAR, Sendil Kumar Jaya, 560037 Bangalore Karnataka (IN); PAUL, Amrit, 500090 Telangana Hyderabad (IN); ZAID, Mohd, 110025 Delhi (IN); MALHOTRA, Chakshu, 110059 New Delhi (IN); MANNOPANTAR, Raghottam Narayan, 560076 Bangalore (IN)
(74) Representative: Finnegan Europe LLP

(57) **Abstract**

The present disclosure discloses method and a road region determination system for determining drivable road regions for safe navigation of an autonomous vehicle. The road region determination system receives real-time images of road in which autonomous vehicle is travelling, from image sensors. Each of real-time images of road is segmented into polygon regions and trend lines to obtain plurality of features using pre-trained road segmentation model. An orientation of the road is identified in real-time images as one of linear orientation and non-linear orientation based on slope measured between successive intermediate points distributed evenly on trend lines. The road region determination system manages redistribution of intermediate points on trend lines based on orientation of the road. Thereafter, paired points from intermediate points redistributed on the trend lines is identified, where paired points are connected using a horizontal line to determine drivable road regions for autonomous vehicle.

## Description

### TECHNICAL FIELD

The present subject matter is related in general to image processing and segmentation, more particularly, but not exclusively to a method and system for determining drivable road regions for safe navigation of an autonomous vehicle.

### BACKGROUND

In recent time, with rapid advancement in automobile industry, road safety has gained a lot of importance. Detecting road region for day and night lighting conditions is at most important for safe navigation of vehicles. Generally, detection of road region works well for day lighting conditions using input colour images. However, it becomes very difficult to do the same on night lighting conditions as it is dependent on other inputs from other sub system such as, navigation stack powered by Global Positioning System (GPS), lidar sensors and other sensors for various predictions.

Currently, in the conventional system, multiple disparate sub-systems such as, cameras, lidars and sonars are integrated and used in the autonomous vehicles for road boundary detection and navigation. However, there exist huge challenges in integrating all the sub-subsystems due to difference in format of data of the sub-systems. In addition, each of the sub-systems are dependent on each other. Hence, if any one sub-system fails, then whole system may fail to navigate the autonomous vehicle. Also, on night lighting conditions, it is arduous to recognize road regions in small detected region of interest from images. Further, these small regions of interest within the images should provide very precise information such as, left road boundary, right road boundary, lane information, angle of curvature of the road and the like about road features. Typically, for night lighting condition, Infrared Radiation (IR) camera images may be used for detecting road regions. The IR camera stores information in a single channel data (such as, grey scale or single dimensional image). Thus, the IR camera does not have depth and gradients information. Such data poses a greater challenge, to make machine learning technique to learn features of road region. Hence, usage of IR images results in very low accuracy in predictions of road region. In addition, in IR images of road, while considering a small fixed region of interest, in field of view of the camera over multiple successive frames, a difference in road region are minimal with respect to current road, thus making the images less scale variance.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure may relate to a method for determining drivable road regions for safe navigation of an autonomous vehicle. The method includes receiving real-time images of a road in which an autonomous vehicle is travelling, from one or more image sensors, associated with the autonomous vehicle. Each of the real-time images of the road is segmented into polygon regions and trend lines to obtain a plurality of features associated with the road using a pre-trained road segmentation model. The road segmentation model is trained with a machine learning technique, using a plurality of training images marked with road features, polygon regions and trend lines. The method includes identifying orientation of the road in the real-time images to be one of, a linear orientation and a non-linear orientation based on a slope measured between successive intermediate points distributed evenly on the trend lines. Further, the method includes managing redistribution of the intermediate points on the trend lines based on the orientation of the road. Thereafter, the method includes identifying paired points from the intermediate points redistributed on the trend lines. The paired points are connected using a horizontal line to determine the drivable road regions for the autonomous vehicle.

In an embodiment, the present disclosure may relate to a road region determination system for determining drivable road regions for safe navigation of an autonomous vehicle The road region determination system may include a processor and a memory communicatively coupled to the processor, where the memory stores processor executable instructions, which, on execution, may cause the road region determination system to receive real-time images of a road in which an autonomous vehicle is travelling, from one or more image sensors, associated with the autonomous vehicle. The road region determination system segments each of the real-time images of the road into polygon regions and trend lines to obtain a plurality of features associated with the road using a pre-trained road segmentation model. The road segmentation model is trained with a machine learning technique, using a plurality of training images marked with road features, polygon regions and trend lines. Further, the road region determination system identifies orientation of the road in the real-time images to be one of, a linear orientation and a non-linear orientation based on a slope measured between successive intermediate points distributed evenly on the trend lines. Based on the orientation of the road, the road region determination system manages redistribution of the intermediate points on the trend lines. Thereafter, the road region determination system identifies paired points from the intermediate points redistributed on the trend lines. The paired points are connected using a horizontal line to determine the drivable road regions for the autonomous vehicle.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**Fig.1** illustrates an exemplary environment for determining drivable road regions for safe navigation of an autonomous vehicle in accordance with some embodiments of the present disclosure;
**Fig.2A** shows a detailed block diagram of a road region determination system in accordance with some embodiments of the present disclosure;
**Fig.2B** shows an exemplary representation for training road segmentation model in accordance with some embodiments of the present disclosure;
**Fig.3A****,** **Fig.3B and Fig.3C** shows an exemplary representation of segmenting an image of a road into polygon regions and trend lines in accordance with some embodiments of the present disclosure;
**Fig.4** illustrates a flowchart showing a method for identifying orientation of a road in accordance with some embodiments of present disclosure;
**Fig.5A** illustrates an exemplary representation of intermediate points on trends lines in accordance with some embodiments of present disclosure;
**Fig.5B** illustrates an exemplary representation of paired points on trend lines connected using horizontal lines in accordance with some embodiments of present disclosure;
**Fig.6** illustrates a flowchart showing a method for determining drivable road regions for safe navigation of an autonomous vehicle in accordance with some embodiments of present disclosure; and
**Fig.7** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

Embodiments of the present disclosure relate to a method and a road region determination system for determining drivable road regions for safe navigation of an autonomous vehicle. In an embodiment, the autonomous vehicle refers to a driverless vehicle. At any instance of time while the autonomous vehicle is moving, real-time images of road in which the autonomous vehicle is travelling is received from one or more image sensors associated with the autonomous vehicle. The present disclosure segments the real-time images of the road into polygon regions and trend lines based on a road segmentation model (e.g., using or applying the road segmentation model to the images). In an embodiment, the road segmentation model is trained using a plurality of training images by making use of machine learning technique. Based on the segmentation, orientation of the road in the real-time images is determined to be either linear orientation and non-linear orientation. The road region determination system determines the drivable road regions based on the segmentation and orientation of the road. The present disclosure enables the autonomous vehicle to have multiple fail-safe mechanism to detect drivable road regions.

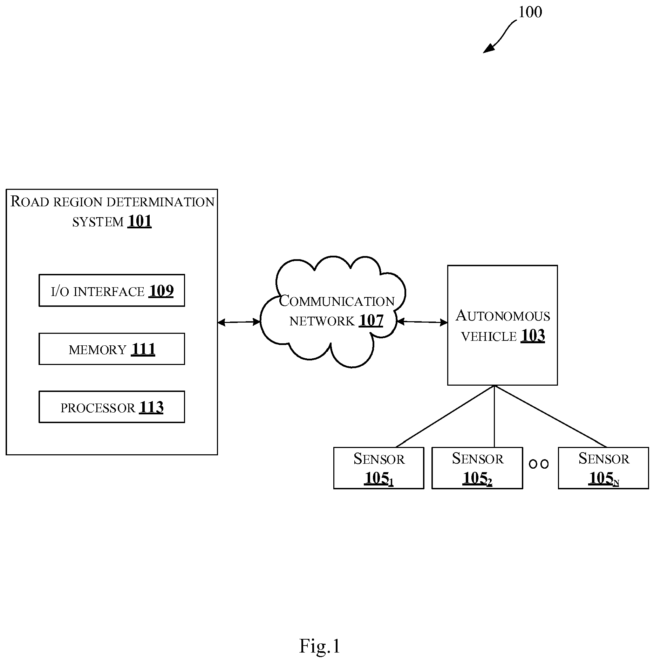

**Fig.1** illustrates an exemplary environment for determining drivable road regions for safe navigation of an autonomous vehicle in accordance with some embodiments of the present disclosure.

As shown in Fig.1, an environment 100 includes a road region determination system 101 connected through a communication network 107 to an autonomous vehicle 103. In an embodiment, the autonomous vehicle 103 may refer to a driverless vehicle. The autonomous vehicle 103 is associated with an image sensor 105₁, an image sensor 105₂, ................ and an image sensor 105_{N} (collectively referred as one or more image sensors 105). The one or more image sensors 105 may include for example, Infrared (IR) camera, a colour camera and the like. A person skilled in the art would understand that any other image sensors which may be used with the autonomous vehicle 103, not mentioned explicitly, may also be used in the present disclosure. The image sensors may be located within or on the vehicle to capture images of the road in which the vehicle is travelling. The image sensors may also or alternatively be located along the road in which the vehicle is travelling and/or within or on other vehicles travelling in the road. The road region determination system 101 may determine drivable road regions and provide to a control unit (not shown explicitly in the Fig.1) of the autonomous vehicle 103. In an embodiment, the road region determination system 101 may exchange data with other components and service providers using the communication network 107. The communication network 107 may include, but is not limited to, a direct interconnection, an e-commerce network, a Peer-to-Peer (P2P) network, Local Area Network (LAN), Wide Area Network (WAN), wireless network (for example, using Wireless Application Protocol), Internet, Wi-Fi and the like.

In one embodiment, the road region determination system 101 may include, but is not limited to, a laptop, a desktop computer, a Personal Digital Assistant (PDA), a notebook, a smartphone, a tablet, a server, Electronic Controller Unit (ECU) associated with navigation unit of the autonomous vehicle 103, and any other computing devices. A person skilled in the art would understand that, any other devices, not mentioned explicitly, may also be used as the road region determination system 101 in the present disclosure. In an embodiment, the road region determination system 101 may be integrated within the autonomous vehicle 103 or may be configured to function as a standalone system.

Further, the road region determination system 101 may include an I/O interface 109, a memory 111 and a processor 113. The I/O interface 109 may be configured to receive the real-time images of the road from the one or more image sensors 105 associated with the autonomous vehicle 103, such as one or more image sensors 105 of the autonomous vehicle 103. The real-time images of the road received from the I/O interface 109 may be stored in the memory 111. The memory 111 may be communicatively coupled to the processor 113 of road region determination system 101. The memory 111 may also store processor instructions which may cause the processor 113 to execute the instructions for determining drivable road regions for safe navigation of an autonomous vehicle 103.

While the autonomous vehicle 103 is moving on a road, the road region determination system 101 determines the lighting condition in current location of the autonomous vehicle 103 based on inputs received from one of a Global Positioning System (GPS) unit, a light flux measurement sensor and a weather forecast unit (not shown explicitly in Fig.1) communicatively connected to the autonomous vehicle 103. A person skilled in the art would understand that, any other devices, not mentioned explicitly, may also be used to detect lighting condition. In an embodiment, the GPS unit, the light flux measurement sensor and weather forecast unit may be present in the autonomous vehicle 103. In an embodiment, the GPS unit is used to detect latitude and longitude coordinates, which may be used to locate the current location of the autonomous vehicle 103.

The light flux measurement sensor may be used to measure light intensity for both day and night lighting conditions. The weather forecast unit streams weather forecast for the current location determined using the GPS unit. The lighting condition may be determined as for example, day lighting condition, night lighting condition and the like. Based on the lighting condition in the current location, the road region determination system 101 receives the real-time images of the road in which the autonomous vehicle 103 is travelling from the one or more image sensors 105. In other words, the road region determination system 101 may trigger the one or more image sensors 105 based on the lighting condition determined for the current location of the autonomous vehicle 103. For instance, the IR camera provides IR images, and hence may be triggered for providing the real-time images of the road for the night lighting conditions. Similarly, the colour camera provides colour images, and hence may be triggered for providing the real-time images of the road for the day lighting conditions. The road region determination system 101 may segment each of the real-time images of the road into polygon regions and trend lines. In an embodiment, the polygon regions may include an entire road polygon region, left road polygon region and right road polygon region. In an embodiment, the trend lines may include a left trend line and a right trend line which are identified on the left road polygon region and the right road polygon region respectively.

The road region determination system 101 segments the real-time images of the road to obtain a plurality of features associated with the road using a pre-trained road segmentation model. In an embodiment, the plurality of features associated with the road includes type of road based on material used in the road, such as, bituminous road, WBM road, limestone road and the like and colour of road. A person skilled in the art would understand that any other features of the road, not mentioned explicitly, may also be used in the present disclosure. In an embodiment, the road segmentation model is trained based on a machine learning technique, using a plurality of training images which are annotated with road features, polygon regions and trend lines manually. A person skilled in the art would understand that any machine learning technique may also be used by the road region determination system 101 in the present disclosure. Further, the road region determination system 101 distributes intermediate points evenly on the left trend line and the right trend line. For example, the road region determination system 101 may select points on the left and right trend lines as intermediate points using a pre-determined interval or identify a pre-determined number of evenly-distributed points on the left and right trend lines within the obtained images.

Subsequently, the road region determination system 101 may identify an orientation of the road in the real-time images based on a slope measured between successive intermediate points which are distributed evenly on the left trend line and the right trend line. The orientation of the road may be identified as one of a linear orientation and a non-linear orientation. The orientation of the road may be linear orientation when the slope between each successive intermediate point is within a predefined threshold range of slope. Alternatively, the orientation of the road may be the non-linear orientation when the slope between each of the successive intermediate point is beyond the predefined threshold range of slope. Further, the road region determination system 101 may manage redistribution of the intermediate points on the trend lines based on identification of the orientation of the road. In an embodiment, when the orientation of the road is identified as non-linear orientation, the road region determination system 101 may alter the distribution of the intermediate points by placing more intermediate points on curved region of the road, e.g., by reducing the interval used to select points on the left trend line and the right trend line as intermediate points in the curved region of the road or increasing the number of points to be selected for distribution on the left and right trend lines in the curved region of the road. Alternatively, on identifying the orientation of the road to be linear, the road region determination system 101 may maintain the evenly distribution of the intermediate points. Thereafter, the road region determination system 101 may identify paired points from the intermediate points redistributed on the trend lines, such that, the paired points are connected using a horizontal line (e.g., a line substantially parallel to a horizon line within the obtained images or a line that is horizontal within the respective image frame) to determine the drivable road regions for the autonomous vehicle 103. In an embodiment, the paired points of the intermediate point are identified by connecting each intermediate point on the left trend line with corresponding intermediate point on the right trend line with the horizontal line. In an embodiment, the road regions include a left road boundary region, a right road boundary region and an angle of curvature of the road.

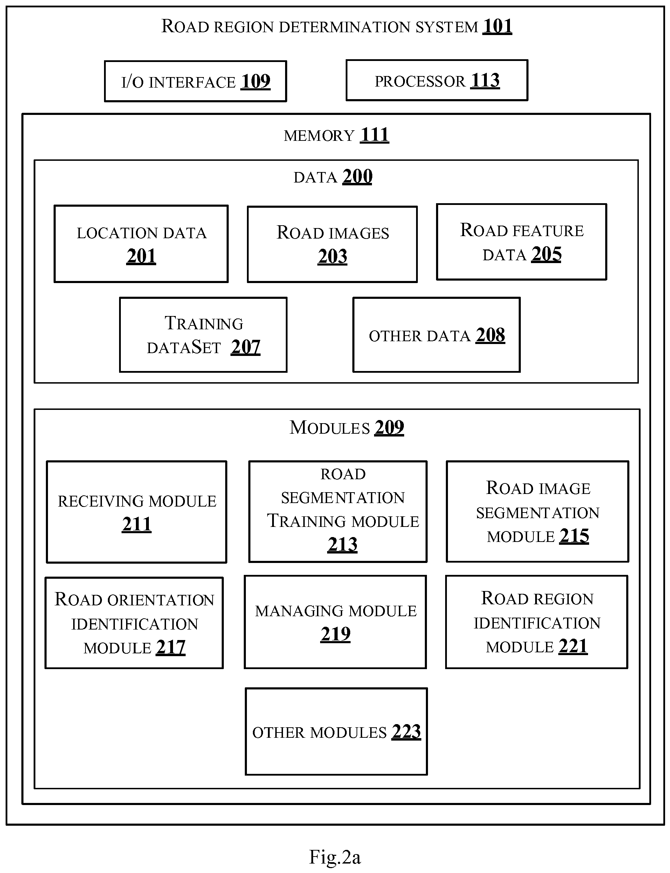

**Fig.2A** shows a detailed block diagram of a road region determination system in accordance with some embodiments of the present disclosure.

The road region determination system 101 may include data 200 and one or more modules 209 which are described herein in detail. In an embodiment, data 200 may be stored within the memory 111. The data 200 may include, for example, location data 201, road images 203, road feature data 205, training dataset 207 and other data 208.

The location data 201 may include the data from the GPS unit, the light flux measurement sensor and the weather forecast unit which are communicatively connected with the autonomous vehicle 103. The location data 201 may be used to determine the lighting condition in the current location of the autonomous vehicle 103. For instance, the data from the GPS unit may include the latitude and longitude coordinates which are used to locate the current location of the autonomous vehicle 103. The data from the light flux measurement sensor may include values of light intensity measured for both day and night lighting conditions. Further, the data from the weather forecast unit may include weather information for the current location of the autonomous vehicle 103.

The road images 203 may include the real-time images of the road in which the autonomous vehicle 103 is currently traveling. The real-time images of the road may be received from the one or more image sensors 105 based on the lighting condition detected based on the location data 201. For example, when the lighting condition is identified for day time, the real-time images of the road may be received from the colour camera. Similarly, when the lighting condition is identified for night time, the real-time images of the road may be received from the IR camera.

The road feature data 205 may include the plurality of features associated with the road. The plurality of features may include type of road, colour of the road and the like. A person skilled in the art would understand that any other features of the road, not mentioned explicitly may also be used in the present disclosure.

The training dataset 207 may include the plurality of training images along with polygon regions with labels. In an embodiment, the polygon regions may be used to define the plurality of features associated with the road. In an embodiment, the plurality of training images may include IR images and colour images.

The other data 208 may store data, including temporary data and temporary files, generated by modules 209 for performing the various functions of the road region determination system 101.

In an embodiment, the data 200 in the memory 111 are processed by the one or more modules 209 present within the memory 111 of the road region determination system 101. In an embodiment, the one or more modules 209 may be implemented as dedicated units. As used herein, the term module refers to an application specific integrated circuit (ASIC), an electronic circuit, a field-programmable gate arrays (FPGA), Programmable System-on-Chip (PSoC), a combinational logic circuit, and/or other suitable components that provide the described functionality. In some implementations, the one or more modules 209 may be communicatively coupled to the processor 113 for performing one or more functions of the road region determination system 101. The said modules 209 when configured with the functionality defined in the present disclosure will result in a novel hardware.

In one implementation, the one or more modules 209 may include, but are not limited to a receiving module 211, a road segmentation training module 213, a road image segmentation module 215, a road orientation identification module 217, a managing module 219 and a road region identification module 221. The one or more modules 209 may also include other modules 223 to perform various miscellaneous functionalities of road region determination system 101. In an embodiment, the other modules 223 may include a lighting condition determination module and an intermediate point distribution module. The lighting condition determination module may receive the data from the GPS unit, the light flux measurement sensor and the weather forecast unit to determine the lighting condition at the current location of the autonomous vehicle 103. The intermediate point distribution module may distribute the intermediate points evenly on the left trend line and the right trend line based on a predefined number. For instance, the predefined number of intermediate points may be set to "eight", "sixteen" and the like.

The receiving module 211 may receive the real-time images of the road from the one or more image sensors 105 associated with the autonomous vehicle 103. The real-time images of the road may be received based on the lighting condition in the current location of the autonomous vehicle 103. Further, the receiving module 211 may receive the data from the GPS unit, the light flux measurement sensor and the weather forecast unit which are coupled with the autonomous vehicle 103. The receiving module 211 may provide the drivable road region to the control unit of the autonomous vehicle 103 for triggering respective units in the autonomous vehicle 103 based on the road regions.

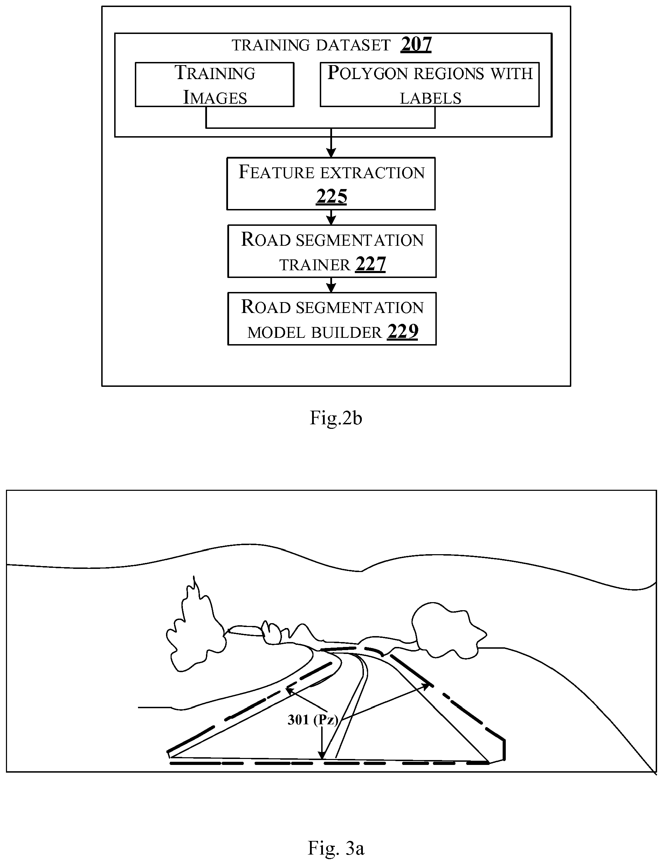

The road segmentation training module 213 may train the road segmentation model using the plurality of training images based on machine learning technique. In an embodiment, the plurality of training images may be annotated with the road features, the polygon regions and the trend lines. **Fig.2B** shows an exemplary representation for training road segmentation model in accordance with some embodiments of the present disclosure. As shown in Fig.2B, the road segmentation training module 213 may use the training dataset 207 for training the road segmentation model. As shown in Fig.2B, the training dataset 207 includes the plurality of training images and the polygon regions with labels. In an embodiment, the polygon regions may be used to define the plurality of features associated with the road. In an embodiment, the plurality of training images may include, IR images and colour images. In an embodiment, the road segmentation training module 213 may train the road segmentation model separately for the IR images and for the colour images of the road. Further, the polygon regions with labels, includes for each training image of the road, the entire road region, represented as (P_{z}), the left road polygon region, represented as (P_{L}), the right road polygon region, represented as (P_{R}), the left trend line marked on the left road polygon region and represented as (T_{L}) and the right trend line marked in the right road polygon region and represented as (T_{R}.). As shown in Fig.2B, at 225, the road segmentation training module 213 may extract features from the training images. In an embodiment, the extracted features against each label are transmitted to a road segmentation trainer 227 for training.

The road segmentation trainer 227 may include machine learning methods and technique for training. For instance, the machine learning models such as, faster RCNN with RESNet may be used to train the road segmentation model. A person skilled in the art would understand that any other machine learning technique, not mentioned explicitly herein, may also be used in the present disclosure. Further, the road segmentation training module 213 may include a road segmentation model builder 229 builds the road segmentation model based on the polygon region labels and extracted features.

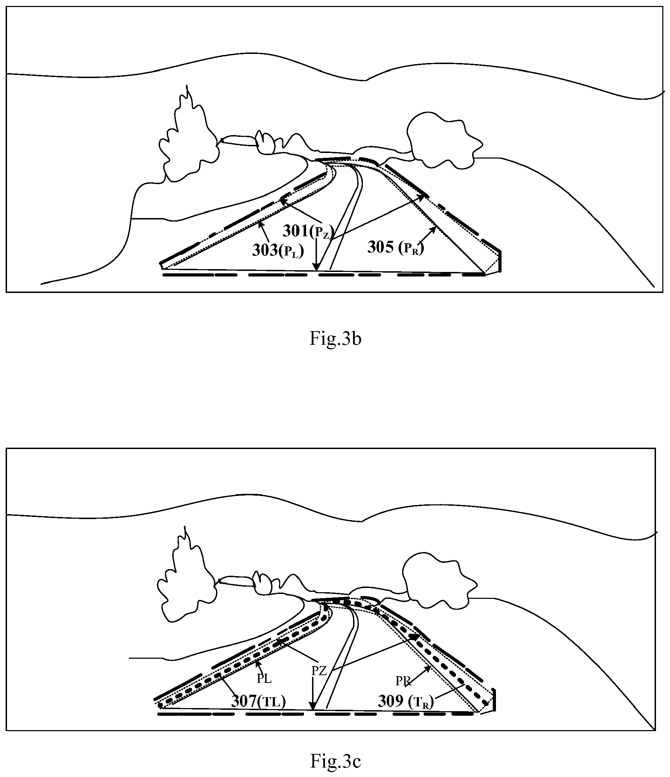

The road image segmentation module 215 may segment the real-time images of the road received from the receiving module 211 into the polygon regions and the trend lines based on the pretrained road segmentation model. The road segmentation model as described above, is trained with the machine learning technique, using the plurality of training images marked with road features, polygon regions and trend lines. The road image segmentation module 215 may segment the road in the real-time images into three types of polygon regions namely, the entire road polygon region, the left road polygon region and the right road polygon region. The road image segmentation module 215 may segment the real-time images of the road in order to obtain the plurality of features associated with the road. **Fig.3A** shows an exemplary representation of segmenting an image of a road into entire road polygon regions in accordance with some embodiments of the present disclosure. As shown in the Fig.3A, the road image segmentation module 215 may segment the entire road region in the image into the entire road polygon region 301 (P_{z}) as represented with a big dotted highlighted region in the road using the pretrained road segmentation model. Similarly, **Fig.3B** shows an exemplary representation of segmenting an image of a road into left road polygon region and right road polygon region in accordance with some embodiments of the present disclosure. As shown in the Fig.3B, the road image segmentation module 215 may segment the left road boundary in the image into the left road polygon region 303 (P_{L}), represented with small dotted lines below the big dotted line on the left side of road and a right road boundary into the right road polygon region 305 (P_{R}), represented with a small dotted line below the big dotted line on right side of the road. Further, on segmenting the polygon region on the real-time images of the road, the road image segmentation module 215 may segment the left trend line and the right trend line as shown in Fig.3C. **Fig.3C** shows an exemplary representation of left trend line and the right trend line in accordance with some embodiments of the present disclosure. As shown in the Fig.3C, the road image segmentation module 215 may segment a left trend line 307 (T_{L}), represented with highlighted dotted lines within the left road polygon region 303 (P_{L}). Similarly, the road image segmentation module 215 may segment a right trend line 309 (T_{R}), represented with highlighted dotted lines within the right road polygon region 305 (P_{L}).

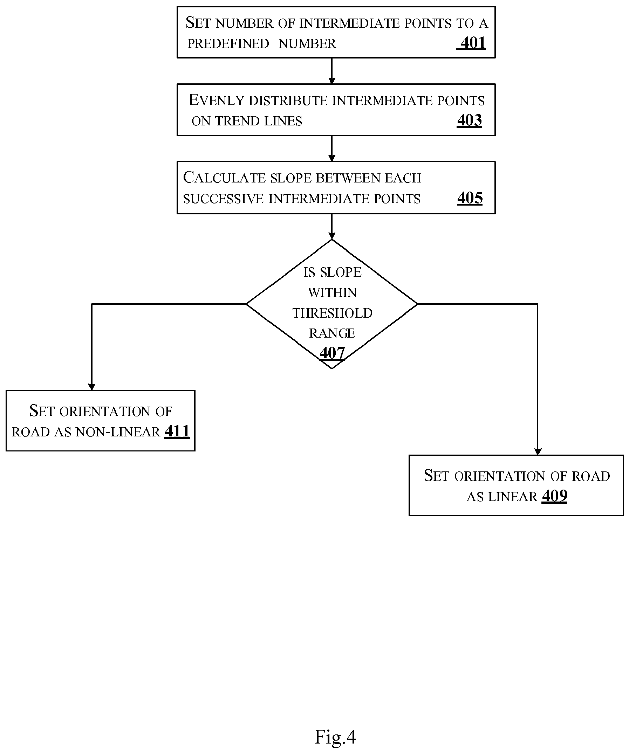

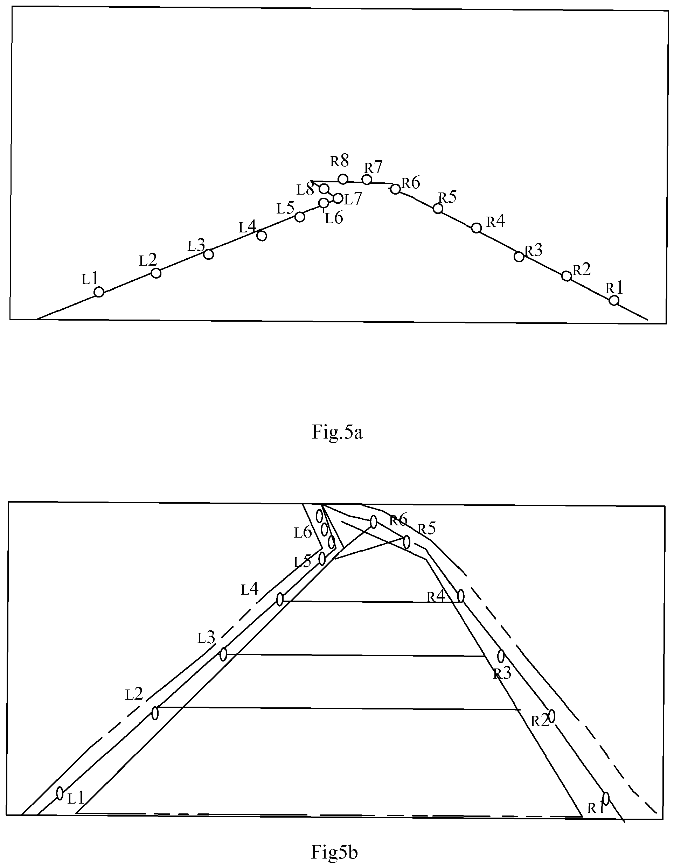

The road orientation identification module 217 may identify the orientation of the road to be one of the linear orientation and the non-linear orientation. **Fig.4** illustrates a flowchart showing a method for identifying orientation of a road in accordance with some embodiments of present disclosure. As shown in Fig.4, at step 401, the road orientation identification module 217 may set a number for the intermediate points to a predefined number. For instance, the predefined number may be eight, sixteen and the like. At block 403, the road orientation identification module 217 may evenly distribute the intermediate points based on the set predefined number on the left trend line and the right trend line. **Fig.5A** illustrates an exemplary representation of intermediate points on trends lines in accordance with some embodiments of present disclosure.

As shown in the Fig.5A, eight intermediate points are evenly distributed on the left trend line and denoted as L1, L2, L3, L4, L5, L6, L7 and L8. Similarly, eight intermediate points are evenly distributed on the right trend line as R1, R2, R3, R4, R5, R6, R7 and R8. Returning back to Fig.4, At block 405, the road orientation identification module 217 may calculate the slope between each successive intermediate points. In an embodiment, the slope may be calculated by dividing the real-time image of the road into X axis and Y axis and calculating an angle at each intermediate point. At block 407, the road orientation identification module 217 may check if value of each slope is within the predefined threshold range of the slopes. If the value of each slope is within the predefined threshold range, the method moves to block 409. Alternatively, if the value of each slope is beyond the threshold range, the method moves to block 411. At block 409, the road orientation identification module 217 may set the orientation of the road to be linear orientation. At block 411, the road orientation identification module 217 may set the orientation of the road to be non-linear orientation.

Returning to Fig.2A, the managing module 219 may manage the redistribution of the intermediate points on the trend lines based on the orientation of the road. The managing module 219 may alter the distribution of the intermediate points by placing more intermediate points on curved region of the road, when the orientation of the road is non-linear. Alternatively, the managing module 219 may maintain the evenly distribution of the intermediate points on the left trend line and the right trend lines, when the orientation of the road is identified to be linear.

The road region identification module 221 may determine the drivable road regions for the autonomous vehicle 103. The road region identification module 221 may identify the paired points from the intermediate points redistributed on the trend lines. **Fig.5B** illustrates an exemplary representation of paired points on trend lines in accordance with some embodiments of present disclosure. As shown in Fig.5B, the road region identification module 221 may identify the paired points based on order of the intermediate points such as, L1 and R1, L2 and R2, ..., Ln and Rn between the left trend line and the right trend line. The road region identification module 221 may connect the paired points using the horizontal line between each pair as shown in Fig.5B. In an embodiment, the paired points when represented in vector form may result in the drivable road regions for the autonomous vehicle 103. In an embodiment, the road regions include left road boundary region, right road boundary region and angle of curvature of the road.

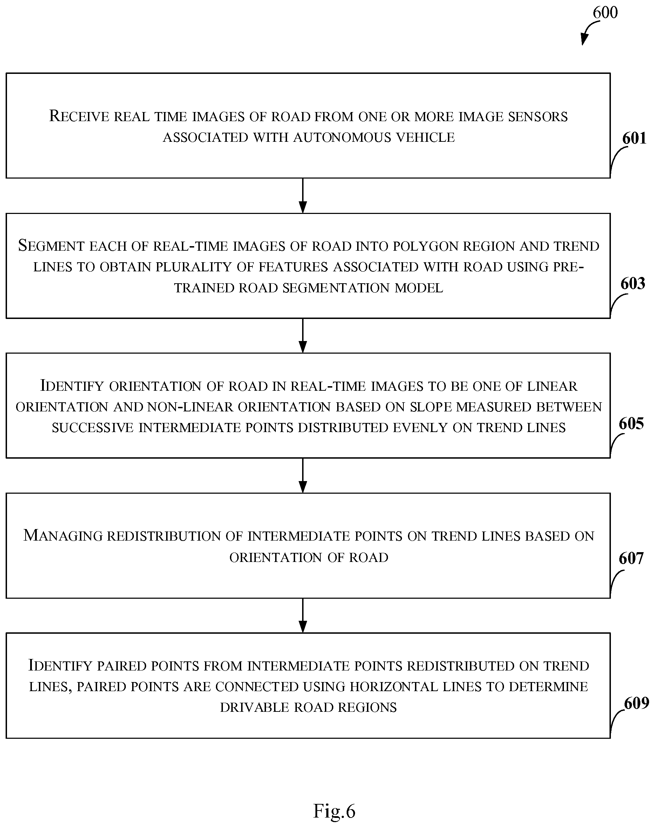

**Fig.6** illustrates a flowchart showing a method for determining drivable road regions for safe navigation of an autonomous vehicle in accordance with some embodiments of present disclosure.

As illustrated in **Fig.6****,** the method 600 includes one or more blocks for determining drivable road regions for safe navigation of an autonomous vehicle 103. The method 600 may be described in the general context of computer executable instructions. Generally, computer executable instructions can include routines, programs, objects, components, data structures, procedures, modules, and functions, which perform particular functions or implement particular abstract data types.

The order in which the method 600 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block 601, the real-time images of the road in which the autonomous vehicle 103 is travelling is received by the receiving module 211 from the one or more image sensors 105 associated with the autonomous vehicle 103.

At block 603, each of the real-time images of the road is segmented by the road image segmentation module 215 into the polygon regions and the trend lines to obtain the plurality of features associated with the road using the pre-trained road segmentation model. In an embodiment, the road segmentation model is trained by the road segmentation training module 213 with the machine learning technique, using the plurality of training images marked with road features, polygon regions and trend lines.

At block 605, the orientation of the road in the real-time images is identified by the road orientation identification module 217 to be one of the linear orientation and the non-linear orientation. The orientation of the road is identified based on the slope measured between the successive intermediate points distributed evenly on the left trend line and the right trend line.

At block 607, redistribution of the intermediate points on the trend lines is managed by the managing module 219 based on the orientation of the road.

At block 609, the paired points from the intermediate points redistributed on the trend lines is identified by the road region identification module 221, such that the paired points are connected using the horizontal line to determine the drivable road regions for the autonomous vehicle.

### Computing System

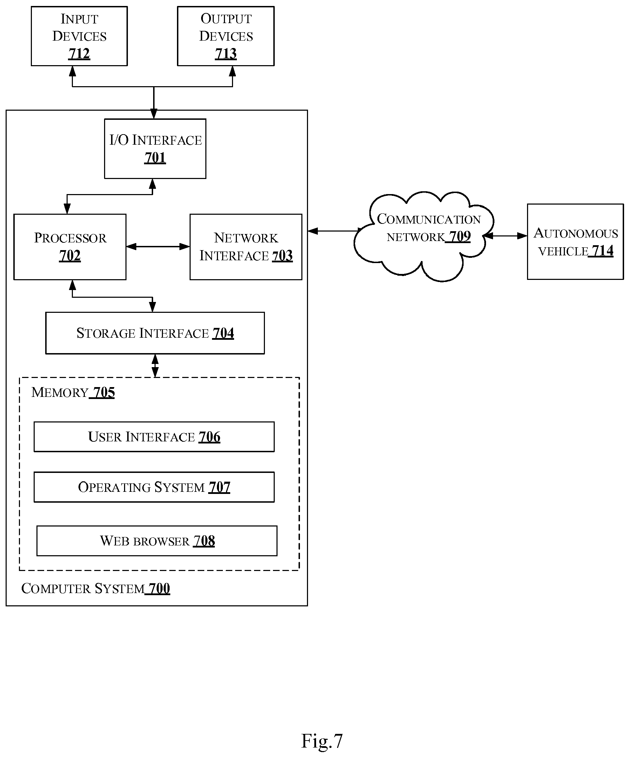

**Fig.7** illustrates a block diagram of an exemplary computer system 700 for implementing embodiments consistent with the present disclosure. In an embodiment, the computer system 700 may be used to implement the road region determination system 101. The computer system 700 may include a central processing unit ("CPU" or "processor") 702. The processor 702 may include at least one data processor for determining drivable road regions for safe navigation of an autonomous vehicle. The processor 702 may include specialized processing units such as, integrated system (bus) controllers, memory management control units, floating point units, graphics processing units, digital signal processing units, etc.

The processor 702 may be disposed in communication with one or more input/output (I/O) devices (not shown) via I/O interface 701. The I/O interface 701 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 701, the computer system 700 may communicate with one or more I/O devices. For example, the input device may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system 700 consists of the road region determination system 101. The processor 702 may be disposed in communication with the communication network 709 via a network interface 703. The network interface 703 may communicate with the communication network 709. The network interface 703 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 709 may include, without limitation, a direct interconnection, local area network (LAN), wide area network (WAN), wireless network (e.g., using Wireless Application Protocol), the Internet, etc. Using the network interface 703 and the communication network 709, the computer system 700 may communicate with an autonomous vehicle 714. The network interface 703 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 709 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 702 may be disposed in communication with a memory 705 (e.g., RAM, ROM, etc. not shown in fig.7) via a storage interface 704. The storage interface 704 may connect to memory 705 including, without limitation, memory drives, removable disc drives, etc., employing connection protocols such as, serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 705 may store a collection of program or database components, including, without limitation, user interface 706, an operating system 707 etc. In some embodiments, computer system 700 may store user/application data, such as, the data, variables, records, etc., as described in this disclosure. Such databases may be implemented as fault-tolerant, relational, scalable, secure databases such as Oracle or Sybase.

The operating system 707 may facilitate resource management and operation of the computer system 700. Examples of operating systems include, without limitation, APPLE MACINTOSH^{R} OS X, UNIX^{R}, UNIX-like system distributions (E.G., BERKELEY SOFTWARE DISTRIBUTION™ (BSD), FREEBSD™, NETBSD™, OPENBSD™, etc.), LINUX DISTRIBUTIONS™ (E.G., RED HAT™, UBUNTU™, KUBUNTU™, etc.), IBM™ OS/2, MICROSOFT™ WINDOWS™ (XP™, VISTA™/7/8, 10 etc.), APPLE^{R} IOS™, GOOGLE^{R} ANDROID™, BLACKBERRY^{R} OS, or the like.

In some embodiments, the computer system 700 may implement a web browser 708 stored program component. The web browser 708 may be a hypertext viewing application, for example MICROSOFT® INTERNET EXPLORER™, GOOGLE® CHROME™, MOZILLA® FIREFOX™, APPLE® SAFARI™, etc. Secure web browsing may be provided using Secure Hypertext Transport Protocol (HTTPS), Secure Sockets Layer (SSL), Transport Layer Security (TLS), etc. Web browsers 708 may utilize facilities such as AJAX™, DHTML™, ADOBE® FLASH™, JAVASCRIPT™, JAVA™, Application Programming Interfaces (APIs), etc. In some embodiments, the computer system 700 may implement a mail server stored program component. The mail server may be an Internet mail server such as Microsoft Exchange, or the like. The mail server may utilize facilities such as ASP™, ACTIVEX™, ANSI™ C++/C#, MICROSOFT®, .NET™, CGI SCRIPTS™, JAVA™, JAVASCRIPT™, PERL™, PHP™, PYTHON™, WEBOBJECTS™, etc. The mail server may utilize communication protocols such as Internet Message Access Protocol (IMAP), Messaging Application Programming Interface (MAPI), MICROSOFT® exchange, Post Office Protocol (POP), Simple Mail Transfer Protocol (SMTP), or the like. In some embodiments, the computer system 700 may implement a mail client stored program component. The mail client may be a mail viewing application, such as APPLE® MAIL™, MICROSOFT® ENTOURAGE™, MICROSOFT® OUTLOOK™, MOZILLA® THUNDERBIRD™, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, CD ROMs, DVDs, flash drives, disks, and any other known physical storage media.

An embodiment of the present disclosure makes use of only camera inputs with minimal or no sensor fusion and uses machine-learning technique to determine drivable road regions. Thus, eliminating dependency between multiple sensors.

An embodiment of the present disclosure enables the autonomous vehicle to have multiple fail-safe mechanism to detect drivable road region through segmentation.

An embodiment of the present disclosure for object segmentation may also be used in different applications such as robots vision, surveillance, consumer and retails application etc.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may include media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. Further, non-transitory computer-readable media include all computer-readable media except for a transitory. The code implementing the described operations may further be implemented in hardware logic (e.g., an integrated circuit chip, Programmable Gate Array (PGA), Application Specific Integrated Circuit (ASIC), etc.).

Still further, the code implementing the described operations may be implemented in "transmission signals", where transmission signals may propagate through space or through a transmission media, such as, an optical fiber, copper wire, etc. The transmission signals in which the code or logic is encoded may further include a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" includes non-transitory computer readable medium, hardware logic, and/or transmission signals in which code may be implemented. A device in which the code implementing the described embodiments of operations is encoded may include a computer readable medium or hardware logic. Of course, those skilled in the art will recognize that many modifications may be made to this configuration without departing from the scope of the invention, and that the article of manufacture may include suitable information bearing medium known in the art.

A description of an embodiment with several components in communication with each other does not imply that all such components are required. On the contrary, a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Fig.6** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for determining drivable road regions for safe navigation of an autonomous vehicle, the method comprising:
receiving, by a road region determination system, real-time images of a road in which the autonomous vehicle is travelling, from one or more image sensors, associated with the autonomous vehicle;
segmenting, by the road region determination system, each of the real-time images of the road into polygon regions and trend lines to obtain a plurality of features associated with the road using a pre-trained road segmentation model, wherein the road segmentation model is trained with a machine learning technique, using a plurality of training images marked with road features, polygon regions, and trend lines;
identifying, by the road region determination system, orientation of the road in the real-time images to be one of a linear orientation and a non-linear orientation, based on a slope measured between successive intermediate points distributed evenly on the trend lines;
managing, by the road region determination system, redistribution of the intermediate points on the trend lines based on the orientation of the road; and
identifying, by the road region determination system, paired points from the intermediate points redistributed on the trend lines, wherein the paired points are connected using a horizontal line to determine the drivable road regions for the autonomous vehicle.

2. The method as claimed in claim 1, wherein the polygon regions comprise an entire road polygon region, a left road polygon region, and a right road polygon region, and the trend lines comprise a left trend line on the left road polygon region and a right trend line on the right road polygon region.

3. The method as claimed in claim 1 or claim 2, wherein the plurality of features associated with the road comprises a type of road and a colour of road.

4. The method as claimed in any of claims 1 to 3, wherein identifying the orientation of the road to be one of the linear orientation and the non-linear orientation comprises:
distributing, by the road region determination system, the intermediate points evenly on a left trend line and a right trend line of the road based on predefined distance;
calculating, by the road region determination system, the slope between each successive intermediate point; and
identifying, by the road region determination system, the orientation of the road to be linear or non-linear when the slope between each successive intermediate point is within a predefined threshold range or beyond the predefined threshold range of slopes respectively.

5. The method as claimed in any of claims 1 to 4, wherein managing the redistribution of the intermediate points on the trend lines comprises altering the distribution of the intermediate points by placing more intermediate points on curved region of the road, on identifying the orientation of the road to be non-linear.

6. The method as claimed in any of claims 1 to 5, wherein managing the redistribution of the intermediate points on the trend lines comprises maintaining the evenly distribution of the intermediate points on identifying the orientation of the road to be linear.

7. The method as claimed in any of claims 1 to 6, wherein identifying the paired points of the intermediate point comprises connecting each intermediate point on a left trend line with corresponding intermediate point on a right trend line with the horizontal line.

8. The method as claimed in any of claims 1 to 7, wherein the road regions comprise a left road boundary region, a right road boundary region, and an angle of curvature of the road.

9. The method as claimed in any of claims 1 to 8, further comprising communicating the determined road regions to a control unit of the autonomous vehicle for triggering respective units in the autonomous vehicle based on the road regions for safe navigation.

10. A road region determination system for determining drivable road regions for safe navigation of an autonomous vehicle, comprising:
a processor; and
a memory communicatively coupled to the processor, wherein the memory stores processor instructions, which, on execution, cause the road determination system to perform the method of any of the preceding claims.

11. A computer-readable medium storing instructions which, when executed by a processor of a road region determination system, cause the road region determination system to perform the method of any of the preceding claims.
